# EUROPEAN PATENT APPLICATION

(11) **EP 4 819 641 A1**
(43) Date of publication of application: **07.10.2026**
(21) Application number: 26166836.2
(22) Date of filing: 23.03.2026
(51) Int. Cl.: H04R 25/00, H04R 5/033

(54) **BROADCAST SELECTION DEVICE AND METHOD FOR HEARING DEVICES**

(30) Priority: 31.03.2025 US 202519095474
(71) Applicant: Sonova AG, 8712 Stäfa (CH)
(72) Inventor: DICKMANN, Georg, 8123 Ebmatingen (CH); MEIER, Hilmar, 8008 Zürich (CH); SCHAPER, Anna-Brit, 8052 Zürich (CH)
(74) Representative: Sykora & König Patentanwälte PartG mbB

(57) **Abstract**

A hearing device stores one or more predefined programs in a program list of the hearing device, receives information related to a selected Bluetooth Low Energy Broadcast Audio transmission from an external device having a rich user interface, and stores the received information in the program list as a Bluetooth Low Energy Broadcast Audio reception program. Selecting the Bluetooth Low Energy Broadcast Audio reception program causes the hearing device to operate as a Bluetooth Low Energy Broadcast Audio receiver that outputs audio from the corresponding Bluetooth Low Energy Broadcast Audio transmission to a user of the hearing device.

## Description

### BACKGROUND

Modem hearing devices are electronic instruments worn in or around the ear canal that compensate for hearing loss or hearing impairment by receiving, amplifying, and reproducing sound waves. In addition to reproducing sound waves, hearing devices can also be used to receive radio waves and reproduce radio signals as sound waves. That is, a user can also tune in to streams or broadcasts instead of reproducing sound waves from a local microphone. A difficulty arises, however, in toggling between these two functions as a user may need to exit a stream to return to a conversation, for example. Coupled with the fact that hearing devices often have limited user interfaces, this function can be difficult to manage in real time.

### BRIEF SUMMARY

As shown throughout the embodiments of this disclosure, improved systems and control methods are presented that address the above-noted shortcomings.

According to an embodiment of the control method, a method for controlling a hearing device, comprises storing one or more predefined programs in a program list of the hearing device, the hearing device being configured to output audio according to a selected one of the predefined hearing programs; receiving, from an external device, information related to a selected Bluetooth Low Energy Broadcast Audio transmission, the external device having a rich user interface for scanning and selecting available Bluetooth Low Energy Broadcast Audio transmissions; storing the received information in the program list, among the stored predefined hearing programs, as a Bluetooth Low Energy Broadcast Audio reception program; receiving a user gesture or an external trigger at the hearing device; and selecting the stored Bluetooth Low Energy Broadcast Audio reception program in response to the user gesture or the external trigger, wherein selecting of the Bluetooth Low Energy Broadcast Audio reception program causes the hearing device to output audio from the corresponding Bluetooth Low Energy Broadcast Audio transmission.

In various embodiments of the above, the user gesture is a gesture to manipulate the user interface of the hearing device, and corresponds to a pause or resume operation that causes the hearing device to pause or resume streaming and outputting audio from the corresponding Bluetooth Low Energy Broadcast Audio transmission; the method may comprise automatically toggling from the stored Bluetooth Low Energy Broadcast Audio reception program to one of the predefined programs upon leaving a range of the corresponding Bluetooth Low Energy Broadcast Audio transmission; and automatically re-selecting the stored Bluetooth Low Energy Broadcast Audio reception program upon re-entering the range of the corresponding Bluetooth Low Energy Broadcast Audio transmission; the hearing device may scan for the selected Bluetooth Low Energy Broadcast Audio broadcast upon re-selecting the stored Bluetooth Low Energy Broadcast Audio reception program; the method may comprise toggling from the stored Bluetooth Low Energy Broadcast Audio reception program to one of the predefined hearing programs based on the received user gesture or external trigger; and automatically re-selecting the stored Bluetooth Low Energy Broadcast Audio reception program upon a conclusion of the selected predefined program; the external trigger may indicate an incoming telephone call to a user of the hearing device, and the one of the predefined hearing programs is a program that provides audio from a connected telephone to the user through the hearing device; the method may comprise receiving information of a plurality of Bluetooth Low Energy Broadcast Audio transmissions, and storing the received information as a plurality of Bluetooth Low Energy Broadcast Audio reception programs, wherein the user gesture toggles between the plurality of stored Bluetooth Low Energy Broadcast Audio reception programs; and/or the received information may comprise a broadcast code and/or a decryption key.

According to another embodiment of the hearing device, the hearing device comprises a Bluetooth transceiver; a loudspeaker; memory storing one or more predefined programs; and at least one processor and memory collectively configured to: receive from an external device information related to a selected Bluetooth Low Energy Broadcast Audio transmission, the external device having a rich user interface for scanning and selecting available Bluetooth Low Energy Broadcast Audio transmissions; store the received information in the memory, among the stored predefined hearing programs, as a Bluetooth Low Energy Broadcast Audio reception program; receiving a user gesture or external trigger; toggle through selection of the predefined programs and the stored Bluetooth Low Energy Broadcast Audio reception program in response to the user gesture or external trigger; and cause the loudspeaker to output audio according to a selected one of the predefined hearing programs and the Bluetooth Low Energy Broadcast Audio reception program, wherein when the Bluetooth Low Energy Broadcast Audio reception program is selected, the hearing device is configured to operate as a Bluetooth Low Energy Broadcast Audio receiver that streams via the Bluetooth transceiver, and outputs via the loudspeaker, audio from the corresponding Bluetooth Low Energy Broadcast Audio transmission to a user of the hearing device.

In various embodiments of the above embodiment, when the user gesture corresponds to a pause or resume operation, the at least one processor is configured to pause or resume streaming and outputting audio from the corresponding Bluetooth Low Energy Broadcast Audio transmission; when the hearing device leaves a reception range of the corresponding Bluetooth Low Energy Broadcast Audio transmission, the at least one processor is configured to automatically transition from the stored Bluetooth Low Energy Broadcast Audio reception program to one of the predefined programs, when the hearing device re-enters the reception range within a predetermined period of time, the at least one processor is configured to automatically re-select the stored Bluetooth Low Energy Broadcast Audio reception program, and wherein when the hearing device re-enters the reception range after a predetermined period of time, the at least one processor is configured to continue operating according to the one of the predefined programs; the at least one processor may be configured to: transition from the stored Bluetooth Low Energy Broadcast Audio reception program to one of the predefined hearing programs based on the received user gesture or external trigger; and automatically re-select the stored Bluetooth Low Energy Broadcast Audio reception program upon a conclusion of the selected predefined program; the external trigger may indicate an incoming telephone call from a telephone paired with the Bluetooth transceiver of the hearing device to the user, and the one of the predefined hearing programs is a program that causes the at least one processor to provide audio from the paired telephone to the user; and/or the received information may comprise a broadcast code and/or a decryption key.

According to still another embodiment of the hearing device, the hearing system may comprise two hearing devices according the above, wherein the two hearing devices constitute a binaural pair, wherein the two hearing devices are configured to communicate information related to selected hearing programs and/or Bluetooth Low Energy Broadcast Audio reception programs with each other, and wherein when only one of the two hearing devices receives the Bluetooth Low Energy Broadcast Audio transmission, the at least one processor of the hearing device that does not receive the Bluetooth Low Energy Broadcast Audio transmission is configured to: attenuate ambient audio while the at least one processor of the hearing device that receives the Bluetooth Low Energy Broadcast Audio transmission is configured to stream and output audio from the corresponding Bluetooth Low Energy Broadcast Audio transmission to the user, or obtain information related to the received Bluetooth Low Energy Broadcast Audio transmission from the other hearing device, and output audio from the corresponding Bluetooth Low Energy Broadcast Audio transmission in conjunction with the other hearing device.

In various embodiments of the above, example the two hearing devices may be each configured to alternately scan for Bluetooth Low Energy Broadcast Audio transmissions in case of a loss of reception of the Bluetooth Low Energy Broadcast Audio transmissions by both hearing devices at the same time or to coordinate terminating reception in case that one of the hearing devices concludes a loss of reception of the Bluetooth Low Energy Broadcast Audio transmissions.

### BRIEF DESCRIPTIONS OF THE SEVERAL VIEWS OF THE DRAWINGS

FIG. 1 illustrates a block diagram of an example system according to the present disclosure.
FIG. 2 illustrates a system drawing of a hearing device and a connected external device according to the present disclosure.
FIG. 3 illustrates a system drawing of a hearing device and a connected external device according to an embodiment of the present disclosure.
FIG. 4 is a flowchart for an alert feature of the hearing device according to an embodiment of the disclosure.
FIG. 5 is a flowchart for a pause/play feature of the hearing device according to an embodiment of the disclosure.
FIG. 6 is a flowchart for a toggle feature for multiple broadcast streams, according to an embodiment of the disclosure.
FIG. 7 is a flowchart for toggling between broadcasts according to an embodiment of the disclosure.
FIG. 8 is a flowchart for retrieving and storing hearing programs according to an embodiment of the disclosure.

### DETAILED DESCRIPTIONS OF THE DRAWINGS

Considering the aforementioned problems with hearing devices integrated with features for receiving radio streams and audio data, there is a need for a hearing device providing an improved user experience. As noted above, hearing devices can have a functionality of receiving wireless streams or broadcasts via radio waves. In this disclosure, a hearing device is described that can receive Bluetooth transmissions and more specifically, receive Bluetooth Low Energy (hereinafter "Bluetooth LE") broadcasts (e.g., in the form of an "Auracast Broadcast"). Such broadcasts are from a transmission source and can be received by numerous devices, without the standard connections associated with Bluetooth and like protocols. In other words, the transmission source may not have any information about the devices that are receiving the transmission, or whether a device is receiving the transmission source at all. Thus, the broadcast continues regardless of whether a device stops receiving the broadcast, is disconnected, etc. In the case of a hearing aid that has a dual functionality of receiving broadcasts and amplifying ambient audio (the audio picked up by the local microphone), and a user that may be using the hearing aid while moving in and out of broadcast ranges, the ability to seamlessly transition between and rejoin broadcasts and between hearing programs when desired can be important to the user experience. An improved hearing aid is thus provided in the present disclosure.

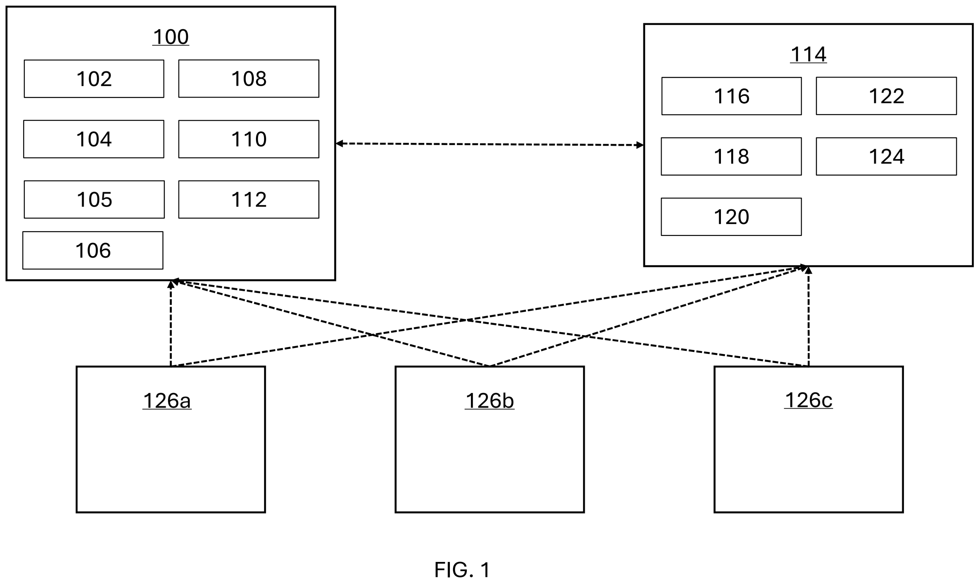

Turning to the figures, FIG. 1 shows a block diagram of a hearing device system. As shown, a hearing device 100 is provided with a user interface 102. The user interface 102 can be, for example, a control pad disposed on a surface of the hearing device with a plurality of control buttons, switches, levers and the like. It is contemplated that user interface 102 may additionally or alternatively utilize different sensors such as a motion or proximity detectors that can detect user gestures, audio detectors which can be responsive to voice commands, touch screen interfaces and the like. As will be explained in more detail below, the user interface 102 may provide inputs that can control a variety of features relating to the operation of the hearing device.

In some embodiments the hearing device 100 is a hearing aid which includes a local microphone for detecting and amplifying ambient audio. The hearing device 100 can have internal circuits and computing devices such as, but not limited to, a processor 104 that can receive inputs from the user interface 102 and control the operation of the hearing device 100, a memory 105, a speaker 106 (sometimes known as a "receiver"), a microphone 108, a transmitter 110 and a wireless receiver 112 (that receives wireless signals) or transceiver (that transmits and receives wireless signals). The memory 105 may store, among other information, hearing programs for operating the hearing device 100. The hearing device may further be understood to include typical components not shown, such as a power circuit that manages the power stored and supplied to the device, a signal processor connected to the microphone, wireless receiver and/or speaker, an internal antenna, and the like. Additionally, multiple wireless receivers that receive different types of frequencies can be provided.

As used herein, the term "hearing program" refers to a set of configuration parameters that may be used by the hearing device 100 to produce audio signals according to a selected audio source. These hearing programs may relate to regular operations of the hearing device 100 and remain unchanged except when the hearing device is reprogrammed. For example, these programs may include processing of ambient audio (such as for hearing in noisy rooms, or private conversations), processing of audio streams from a connected cell phone or other multimedia device (e.g., for communication on the phone via Bluetooth, or audio stream from a television), and/or for processing broadcast audio streams from e.g., a Bluetooth LE broadcast source.

The hearing device may be, for example, a binaural pair of hearing devices that each receive audio signals and produce corresponding audio outputs. For example, the pair of hearing devices may be configured to process and amplify audio data according to a left/right configuration. In a binaural hearing device, when only one of the pair of hearing devices is receiving an audio stream, the other of the pair may attenuate the ambient audio signal relative to the primary or normal operation such that the user can easily concentrate on the remaining audio stream. In other embodiments, the hearing devices may exchange information related to the received audio stream so that both hearing devices can process the received audio signals and/or produce corresponding audio outputs.

The hearing device 100 can receive signals from, send signals to, and/or be controlled by an external device 114, via the wireless receiver or transceiver 112. The signals may be Bluetooth, radio frequency, etc. or any other types of signals used in wireless communications. The external device can be any number of different devices such as a smartphone, a personal computer, a dedicated controller for the hearing device, or the like. The external device 114 includes a user interface 116. The user interface may be a touch screen display, integrated control pad, and the like. The user interface 116 may be a rich user interface, for example. That is, the user interface 116 may provide a more detailed interface for a use to control the operation of the hearing device. In some embodiments, the user interface 102 may be more limited by comparison.

The external device 114 may likewise have internal circuits and computing devices such as, but not limited to, a processor 118 that can receive inputs from the user interface 116 and control the operation of the hearing device 100 via wireless communication, a memory 120, a transmitter 122 and a receiver 124, which collectively provide said communication with the hearing device 100.

The hearing device 100 and the external device 114 may each be in communication with a plurality of transmission sources. In FIG. 1, the transmission sources are shown as a first transmission source 126a, a second transmission source 126b and a third transmission source 126c. Each of the transmission sources may comprise a transmitter or the like for transmitting a radio broadcast or stream. In the following examples, the transmission sources each transmit a Bluetooth LE broadcast signal, but it is contemplated that the transmission sources can similarly transmit other radio waves receivable by the hearing device 100 and/or the external device 114. In a Bluetooth LE broadcast transmission, each of the transmission sources may transmit the broadcast of compressed audio data with a broadcast ID which includes information about the transmission source, name, type, etc. The broadcast may further include a security component such as a PIN, password, decryption key or the like in authorizing or authenticating a device receiving the broadcast. The external device 114 may include an 'assistant' app for interfacing with a Bluetooth receiver (for example, the hearing device 100) and discovering transmission sources. An assistant app may provide instructions to the hearing device 100 to receive a certain broadcast, for example, based on a user's interaction with the user interface 116. The assistant app may also allow a user to interface with the transmission source by providing an interface for the user to enter a decryption code, for example, which is supplied to the hearing device 100 for decryption of a broadcast. Further, the external device 114 may also receive and store hearing programs in the memory 120.

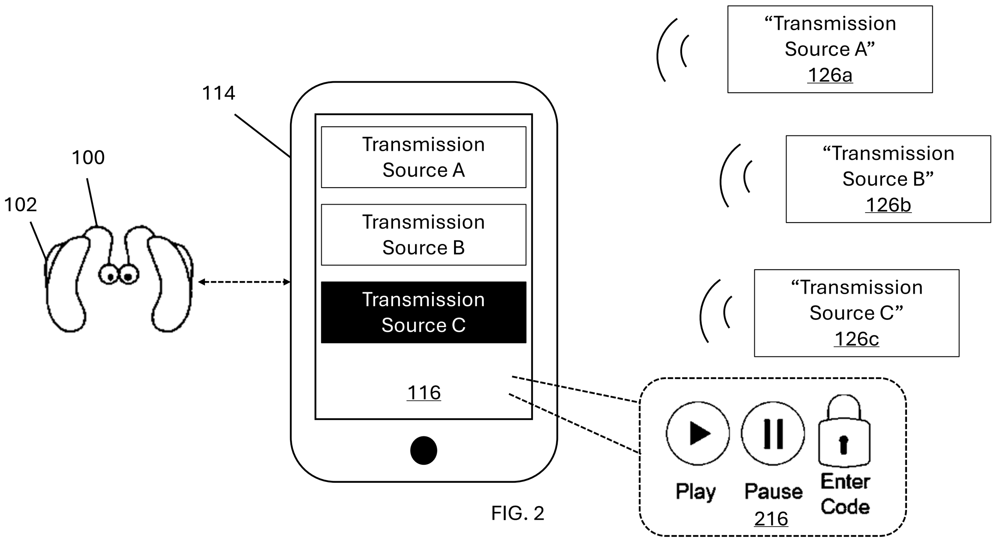

Turning to FIG. 2, an exemplary system is illustrated that includes the hearing device 100, the external device 114 and a plurality of transmission sources. As shown, each of the transmission sources 126a, 126b and 126c transmits a broadcast available to the hearing device 100 and/or the external device 114. In the example shown in FIG. 2, the broadcasts are initially received by the hearing device 100 which communicates with the external device 114. However, other embodiments are contemplated where the external device 114 initially receives the broadcast and communicates with the hearing device 100. The broadcast includes a data stream, which may include a compressed audio data stream, identifying data and in some cases a security component. In some examples, a broadcast may be distributed in data packets which include a portion of an audio stream with corresponding labels, metadata, security components and the like.

As shown in FIG. 2, transmission sources 126a, 126b and 126c are each provided as available broadcasts to the hearing device 100. The external device 114 receives and stores hearing programs regarding each of the broadcasts in the memory 120. As noted above, a hearing program contains configuration information of an associated broadcast. A broadcast list containing a hearing program for each of, or for a select number of known broadcasts, can be stored in the memory 120 of the external device and/or in the memory 110 of the hearing device and/or on a remote server.

As audio signals may originate from different sources and therefore may require different parameters for processing the signals, the hearing program can contain processing parameters for different audio sources. For example, the hearing programs may contain a label of the hearing program, configuration parameters for processing audio (e.g., parameters for processing ambient audio) which may include amplification settings, configuration of noise suppression methods, beamforming and the like, source information such as a source name, address, ID, audio channel (e.g. a language option provided by the transmission source) and classification based on the metadata describing the type of broadcast stream, as well as cached data such as instructions for the hearing device 100 to be able to connect to the respective broadcast, and a stored decryption PIN or passcode, if applicable. It should be understood that hearing programs are not limited to parameters of broadcasts from external sources but can also contain audio parameters for connected devices such as audio signals from the local microphone 108 or from the external device 114, for example. Thus, in addition to storing a hearing program for known broadcast sources, hearing programs containing configuration parameters for all audio sources can be stored. A hearing program may be represented by, for example, a 2-dim vector comprising audio configuration parameters and audio source-specific information.

Further, for binaural hearing devices, the configuration information may include parameters for distributing audio between the pair of hearing devices (i.e. left and right). Binaural hearing devices may communicate among each other the current choice of broadcast audio source and program selection from within that source (in case the same source is offering multiple streams) in order to ensure that both hearing devices render or attempt to render the same or matching (in case of stereo audio) broadcast audio stream.

As shown, the user interface 116 of the external device 114 displays the identification of each of the transmission sources (i.e., transmission source A, transmission source B, transmission source C). The list shown in user interface 116 may correspond to a list of stored hearing programs. The transmission sources are shown in the user interface 116 as a list view, but other user interface configurations such as a block configuration, a cycles or scrolling view of available transmission sources, etc. are contemplated.

A user may select a broadcast, stop or resume a broadcast, and the like, from the hearing device 100 via the user interface 102. For example, a user may use controls of the user interface 102 to toggle between available broadcasts shown on the display of the user interface 116, stop or resume a broadcast, and perform other control functions for interaction of the hearing device 100 with available broadcasts. When the user interface 102 controls the interaction of the hearing device 100 with a broadcast, the operative state of the hearing device 100 can be reflected in the display of the user interface 116. For example, the user interface 102 can toggle to the broadcast from the third transmission source 126c and 'Transmission Source C' will appear as selected on the display of user interface 116.

A user may also select, via the user interface 116, a broadcast for the hearing device 100 to access or tune in to. For example, the user may touch one of the listed transmission sources to tune into a corresponding broadcast. When the user selects a broadcast, the listed transmission source may be provided with a visual indicator that the transmission source has been selected. For example, a selected transmission source can be highlighted, shown as a different color, provided with a different font, enlarged, etc. FIG. 2 shows an example where a broadcast from the third transmission source 126c is selected. Thus, "Transmission Source C" is shown having a different display configuration from the other available transmission sources.

Additionally, the user interface 116 may further include a control interface 216. The control interface 216 may provide further controls to the user for interacting with a selected broadcast, such as a 'play' control for starting or resuming a broadcast, a 'pause' control for stopping reception of the broadcast, and an 'enter code' control for inputting a security PIN, passcode or the like required to decrypt or join a private broadcast. The 'play' and 'pause' controls may alternatively be displayed as a single icon.

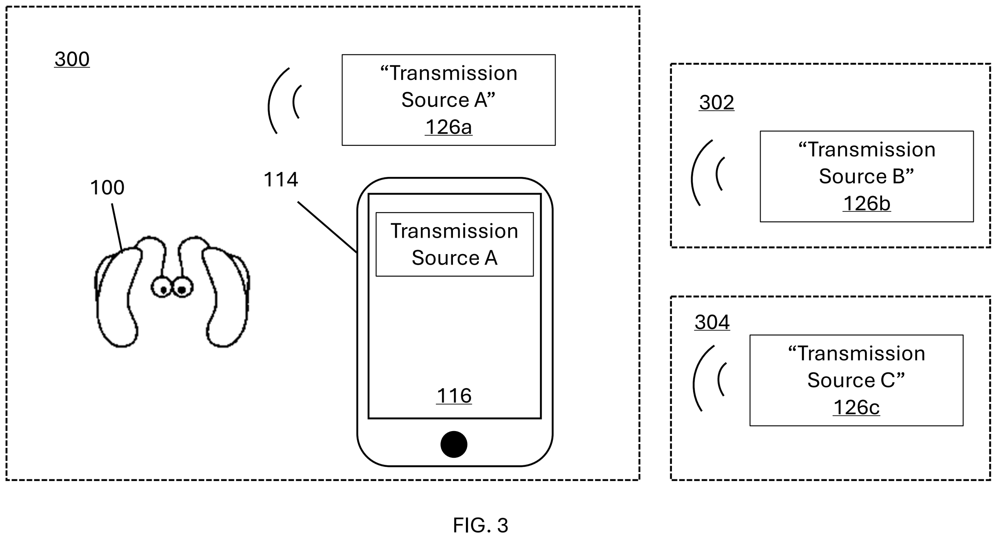

FIG. 3 illustrates an exemplary system according to the disclosure including broadcast ranges for each of the transmission sources. In the example shown, the first transmission source 126a has a range represented by the exemplary range 300. The first transmission source can broadcast to devices, receivers and the like within the range 300. As shown, both the hearing device 100 and the external device are within the range 300 of the first transmission source 126a. Thus, the transmission source 126a is able to broadcast to the hearing device 100 and is shown as an available device on the user interface 116 of the external device 114. Likewise, the second transmission source 126b and the third transmission source 126c each have respective broadcasting ranges 126b and 126c. As shown, the hearing device 100 is outside the ranges 302 and 304. Therefore, the broadcasts from the second transmission source 126b and the third transmission source 126c are detected by the hearing device 100 and not shown as available broadcasts on the user interface 114.

A user of the hearing device 100 may move in and out of range of different broadcast sources during their ordinary course of activities. Thus, the available broadcasts can be constantly changing. The user interface 116 may refresh the list of available broadcasts automatically, in periodic intervals, upon a user request, etc. When a user returns to the range of a transmission source, the hearing program for the given transmission source can be recognized and thus, a hearing device may be easily reconnected with the broadcast, either automatically or upon a user request. As will be explained below, when the hearing device 100 leaves the range of a selected broadcast, an external trigger (e.g., in the form of an alert) may be provided indicating that the broadcast could not be continued and the hearing device may return to an ambient audio.

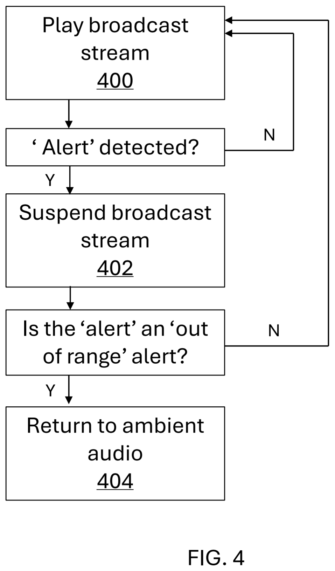

Turning to FIG. 4, a flowchart is provided illustrating the above-described scenario. In the example in FIG. 4, a broadcast is streamed by a device (step 400). The broadcast may continue until an external trigger is detected (step 402). The external trigger may be an audio message output from a hearing device, a visual message displayed on a device interface, a vibration, a combination thereof, and the like. There may be many different types of external triggers, alerting the user to a status of the broadcast, a public service announcement, notification of an incoming call or text message (e.g., by a ringing alert), alter from another connected multimedia device (e.g., a television), a status of a device such as a low battery, or the like. The external trigger may temporarily suspend the audio output of the broadcast in the case of an audio alert (step 402). Alternatively, the alert may be output alongside a continuing broadcast. If the alert indicates that the hearing device is now out of range of the broadcast (an 'out of range' alert) or if the alert indicates that the broadcast is otherwise unavailable due to loss of signal, interference, etc., the hearing device transitions to ambient audio hearing programs (step 404). Alternatively, when the broadcast stream is lost, the hearing device may transition to any other available audio outputs as specified by the hearing programs, or the hearing device may turn off.

The control method may additionally include a function to automatically rejoin a broadcast for a duration of time by transitioning back to the broadcast hearing program if the stream is lost for less than a predetermined period of time (e.g., up to 60 second). This rejoining feature may be automatic, not requiring any user input. For longer-duration losses (e.g., longer than 60 seconds), rejoining the broadcast and transitioning back to the broadcast hearing program may require a user action such as selecting via a user interface to return to the broadcast. In the above-noted time-duration rejoin function, a duration of loss may be measured from the time that both hearing devices lose the audio broadcast stream (in the case of a binaural hearing device). If other broadcasts are available, the hearing device may instead play an available broadcast. When the alert is not directed to the unavailability of the broadcast, the hearing device can return to the active broadcast (step 400). Using the stored hearing programs described above, the hearing device can more easily rejoin broadcasts when a connection is lost.

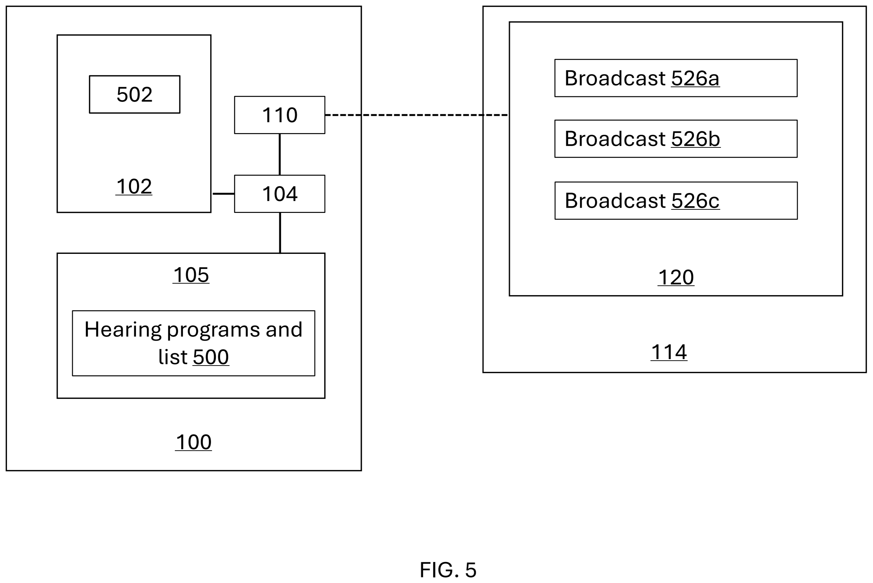

FIG. 5 illustrates a schematic system diagram for the storage and control of a hearing program list. As shown by example in FIG. 5, the memory 120 of the external device 114 stores information related to a plurality of broadcasts 526a, 526b and 526c, such as those from transmission sources 126a, 126b and 126c, respectively. The memory 105 of hearing device 100 stores a plurality of hearing programs and corresponding list 500. As noted above, each hearing program in the list 500 may be a set of parameters for controlling the processing of audio signals. In some cases these may be signals detected by a microphone of the hearing device 100, while in others they may be broadcast signals. In the case of binaural hearing devices, information and hearing programs stored in memory 105 of one device may be shared with the other hearing device so that each hearing device may independently stream broadcast audio signals and/or produce corresponding outputs based on the broadcast audio signals.

The hearing device 100 may control the hearing program list 500 according to the system shown in FIG. 5. For example, selection of a broadcast by a user on the external device 114 may cause the information related to that broadcast to be pushed to hearing device 100, where it is stored in memory 105 as a hearing program and added to the hearing program list. In other instances, the user interface 102 of the hearing device 100 has at least one control 502 and upon actuation of the control 502, the transmitter 110 provides a control signal to the external device 114. The control can be a motion detector and can be activated by a gesture such as a wave. The control signal can contain, for example, an instruction to retrieve broadcast information from the memory 120 of the external device 114. The selected broadcast information may then be transferred and stored in memory 105 of the hearing device 110, and added to the list.

Alternatively, the hearing device 100, external device 114, etc., may continuously scan for broadcasts containing configuration parameters that match the configuration parameters stored in any of the hearing programs and the user may be alerted to the presence of the broadcast, or the hearing device 100 may output the detected broadcast automatically. The automatic scanning for matching broadcasts may be toggled on and off, for example by the user for power management of the device. The hearing device 100 may then operate according to the selected or detected hearing program. That is, the hearing device 100 may attempt to connect to the broadcast associated with the selected hearing program.

Additionally, hearing programs from the program list 500 may be deleted by the user (for example, to save storage space and/or to make room for new entries) or may be deleted automatically when the memory available, or the memory dedicated to the program list 500 becomes full. Hearing programs may be automatically deleted according to a time since last access, for example, where hearing programs that have not been accessed for longer amounts of time are deleted first.

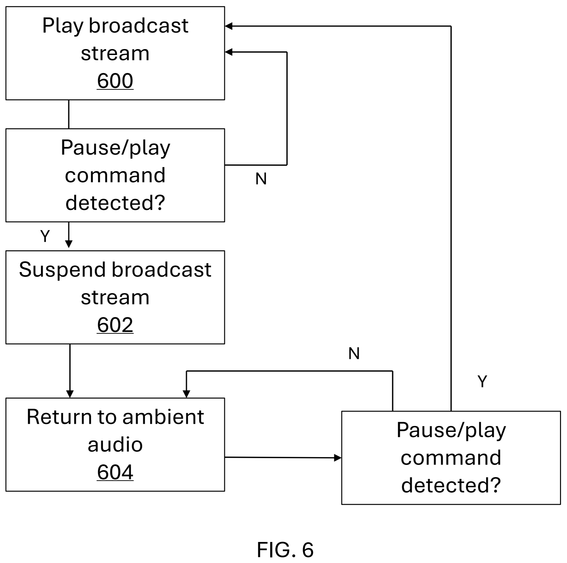

FIG. 6 provides an exemplary control method for toggling between known or available broadcasts. First, a hearing device may connect to a broadcast and output a corresponding audio signal (step 600). The broadcast may be initially selected according to any of the devices and methods described herein. When a broadcast is selected, the hearing device 100 may selectively scan for the selected broadcast, such that the hearing device 100 does not expend energy scanning for unselected broadcasts. This function can be used in accordance with any of the methods or systems described herein. The broadcast can play continuously until a pause/play command is detected. The pause/play command may be initiated based on a gesture or actuation to actuate a control of the user interface on the hearing device. When the pause/play command is initiated, the audio output of the broadcast is suspended (step 602). The hearing device may in turn return to playing ambient audio and transition to the associated ambient audio hearing program. The ambient audio may continue until the pause/play command is detected again. When the pause/play command is detected, the hearing device can transition back to the broadcast hearing program and return to the audio output of the broadcast.

As suggested above, a hearing device according to the present disclosure may quickly return to a broadcast by retrieving the hearing program of the broadcast stored locally in memory 105. It is contemplated that the play/pause command can comprise separate play and pause commands. Additionally, the method may be modified to include a time-out feature, where after a predetermined duration of time, the hearing device will no longer return to the broadcast stream when a play/pause command is detected.

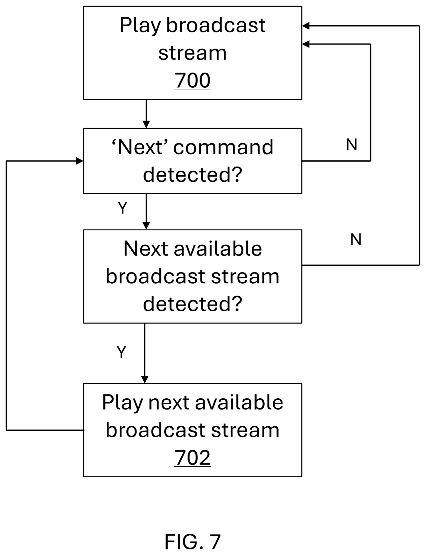

FIG. 7 provides an exemplary control method for a toggle sequence between known or available broadcasts. First, a hearing device may connect to a broadcast and output a corresponding audio signal (step 700). The initial broadcast or audio output may be selectable using a mechanism of the Bluetooth Hearing Aid Profile Hearing Access Service (hereinafter 'HAS'). The broadcast can play continuously until a 'next' command is detected. The 'next' command may be initiated based on different a gesture or actuation from the pause/play command to actuate a control of the user interface on the hearing device. That is, the 'next' command can be initiated by making a different gesture or actuating a different button, etc. When the 'next' command is detected, the hearing device may switch to an audio output of a different broadcast from the list of hearing programs described above. More specifically, the hearing device may switch to an audio output of a broadcast that is next in the list of hearing device programs. The hearing device then plays the audio output of the broadcast identified as the next broadcast (step 702). If there is no other available broadcast, the hearing device may resume the audio output of the initial broadcast. Additionally, there may be an intermediate step of checking whether the selected broadcast (the next broadcast in the hearing program list) is reachable and available prior to or upon attempting a switch to said next broadcast.

Similar user inputs (e.g., gestures or commands) may be utilized to transition between broadcast hearing programs, ambient audio hearing programs, and hearing programs for communicating through a telephone. These inputs may be the same to toggle between broadcast hearing programs and to transition to other types of programs. In such implementations, after cycling through each available broadcast hearing program, the hearing device 100 may transition to an ambient audio hearing program. In other implementations, the user inputs are different such that a first input causes the hearing device 100 to toggle between broadcast hearing programs while a second different input causes the hearing device 100 to transition to non-broadcast types of hearing programs. In this manner, a user can continually cycle through each available broadcast without transitioning to non-broadcast hearing programs.

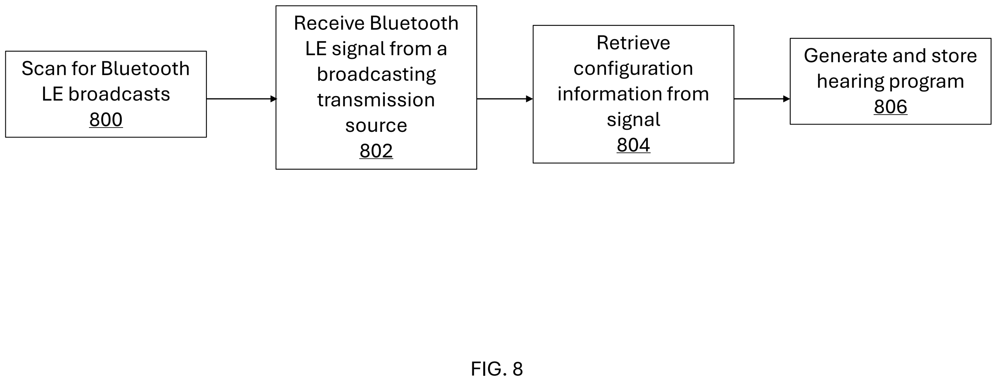

FIG. 8 provides an exemplary control method for retrieving and storing a hearing program according to the disclosure. First, a device scans for Bluetooth LE broadcasts (step 800). As noted above, the scanning may be automatically initiated or initiated upon a user request. In a binaural pair of hearing devices, it may be the case that only a single hearing aid performs scanning at a given time and the individual hearing devices may take turns in scanning to equally distribute power consumption over the hearing devices. The scanning device may be a hearing device or an external device. Further, the scanning device may utilize an Auracast Assistant to scan for broadcasts and manage available signals. The Auracast Assistant may be a device or program stored in the external device, hearing device, or further still in a separate connected local or remote device that scans on behalf of the hearing device. When a Bluetooth LE Signal is received (step 802), the signal may be analyzed by a processor. In the analysis of the data contained in the Bluetooth LE Signal, the processor can retrieve configuration information therefrom (step 804) according to known Bluetooth packet formats. The configuration parameters for a Bluetooth LE signal source can be stored as a hearing program (step 806) in a device memory. the memory may store many individual hearing programs in a hearing program list where a desired hearing program can be easily retrieved. Alternatively, the hearing device may retrieve hearing programs that are not in range by an internet download or by entering known broadcast information, for example.

While various features are presented above, it should be understood that the features may be used singly or in any combination thereof. Further, it should be understood that variations and modifications may occur to those skilled in the art to which the claimed examples pertain.

## Claims

1. A method for controlling a hearing device, comprising:
storing one or more predefined programs in a program list of the hearing device, the hearing device being configured to output audio according to a selected one of the predefined hearing programs;
receiving, from an external device, information related to a selected Bluetooth Low Energy Broadcast Audio transmission, the external device having a rich user interface for scanning and selecting available Bluetooth Low Energy Broadcast Audio transmissions;
storing the received information in the program list, among the stored predefined hearing programs, as a Bluetooth Low Energy Broadcast Audio reception program;
receiving a user gesture or an external trigger at the hearing device; and
selecting the stored Bluetooth Low Energy Broadcast Audio reception program in response to the user gesture or the external trigger,
wherein selecting of the Bluetooth Low Energy Broadcast Audio reception program causes the hearing device to output audio from the corresponding Bluetooth Low Energy Broadcast Audio transmission.

2. The method of claim 1, wherein the user gesture is a gesture to manipulate a user interface of the hearing device, and corresponds to a pause or resume operation that causes the hearing device to pause or resume streaming and outputting audio from the corresponding Bluetooth Low Energy Broadcast Audio transmission.

3. The method of claim 1, further comprising:
automatically toggling from the stored Bluetooth Low Energy Broadcast Audio reception program to one of the predefined programs upon leaving a range of the corresponding Bluetooth Low Energy Broadcast Audio transmission; and
automatically re-selecting the stored Bluetooth Low Energy Broadcast Audio reception program upon re-entering the range of the corresponding Bluetooth Low Energy Broadcast Audio transmission.

4. The method of claim 1, further comprising:
toggling from the stored Bluetooth Low Energy Broadcast Audio reception program to one of the predefined hearing programs based on the received user gesture or external trigger; and
automatically re-selecting the stored Bluetooth Low Energy Broadcast Audio reception program upon a conclusion of the selected predefined program.

5. The method of claim 4, wherein the hearing device scans for the selected Bluetooth Low Energy Broadcast Audio broadcast upon re-selecting the stored Bluetooth Low Energy Broadcast Audio reception program.

6. The method of claim 1, wherein the external trigger indicates an incoming telephone call to a user of the hearing device, and the one of the predefined hearing programs is a program that provides audio from a connected telephone to the user through the hearing device.

7. The method of claim 1, comprising receiving information of a plurality of Bluetooth Low Energy Broadcast Audio transmissions, and storing the received information as a plurality of Bluetooth Low Energy Broadcast Audio reception programs, wherein the user gesture toggles between the plurality of stored Bluetooth Low Energy Broadcast Audio reception programs.

8. The method of claim 1, wherein the received information comprises a broadcast code and/or a decryption key.

9. A hearing device comprising:
a Bluetooth transceiver;
a loudspeaker;
memory storing one or more predefined programs; and
at least one processor and memory collectively configured to:
receive from an external device information related to a selected Bluetooth Low Energy Broadcast Audio transmission, the external device having a rich user interface for scanning and selecting available Bluetooth Low Energy Broadcast Audio transmissions;
store the received information in the memory, among the stored predefined hearing programs, as a Bluetooth Low Energy Broadcast Audio reception program;
receiving a user gesture or external trigger;
toggle through selection of the predefined programs and the stored Bluetooth Low Energy Broadcast Audio reception program in response to the user gesture or external trigger; and
cause the loudspeaker to output audio according to a selected one of the predefined hearing programs and the Bluetooth Low Energy Broadcast Audio reception program,
wherein when the Bluetooth Low Energy Broadcast Audio reception program is selected, the hearing device is configured to operate as a Bluetooth Low Energy Broadcast Audio receiver that streams via the Bluetooth transceiver, and outputs via the loudspeaker, audio from the corresponding Bluetooth Low Energy Broadcast Audio transmission to a user of the hearing device.

10. The hearing device of claim 9, wherein when the user gesture corresponds to a pause or resume operation, the at least one processor is configured to pause or resume streaming and outputting audio from the corresponding Bluetooth Low Energy Broadcast Audio transmission.

11. The hearing device of claim 9,
wherein when the hearing device leaves a reception range of the corresponding Bluetooth Low Energy Broadcast Audio transmission, the at least one processor is configured to automatically transition from the stored Bluetooth Low Energy Broadcast Audio reception program to one of the predefined programs,
wherein when the hearing device re-enters the reception range within a predetermined period of time, the at least one processor is configured to automatically re-select the stored Bluetooth Low Energy Broadcast Audio reception program, and
wherein when the hearing device re-enters the reception range after a predetermined period of time, the at least one processor is configured to continue operating according to the one of the predefined programs.

12. The hearing device of claim 9, wherein the at least one processor is configured to:
transition from the stored Bluetooth Low Energy Broadcast Audio reception program to one of the predefined hearing programs based on the received user gesture or external trigger; and
automatically re-select the stored Bluetooth Low Energy Broadcast Audio reception program upon a conclusion of the selected predefined program.

13. The hearing device of claim 12, wherein the external trigger indicates an incoming telephone call from a telephone paired with the Bluetooth transceiver of the hearing device to the user, and the one of the predefined hearing programs is a program that causes the at least one processor to provide audio from the paired telephone to the user.

14. The hearing device of claim 9, wherein the received information comprises a broadcast code and/or a decryption key.

15. A hearing system comprising:
two hearing devices according to claim 1, wherein the two hearing devices constitute a binaural pair,
wherein the two hearing devices are configured to communicate information related to selected hearing programs and/or Bluetooth Low Energy Broadcast Audio reception programs with each other, and
wherein when only one of the two hearing devices receives the Bluetooth Low Energy Broadcast Audio transmission, the at least one processor of the hearing device that does not receive the Bluetooth Low Energy Broadcast Audio transmission is configured to:
attenuate ambient audio while the at least one processor of the hearing device that receives the Bluetooth Low Energy Broadcast Audio transmission is configured to stream, and output audio from the corresponding Bluetooth Low Energy Broadcast Audio transmission to the user, or
obtain information related to the received Bluetooth Low Energy Broadcast Audio transmission from the other hearing device, and output audio from the corresponding Bluetooth Low Energy Broadcast Audio transmission in conjunction with the other hearing device.

16. The hearing system of claim 15, wherein the two hearing devices are each configured to alternately scan for Bluetooth Low Energy Broadcast Audio transmissions in case of a loss of reception of the Bluetooth Low Energy Broadcast Audio transmissions by both hearing devices at the same time or to coordinate terminating reception in case that one of the hearing devices concludes a loss of reception of the Bluetooth Low Energy Broadcast Audio transmissions.
